# EUROPEAN PATENT SPECIFICATION

(11) **EP 3 067 324 B1**
(45) Date of publication and mention of the grant of the patent: **18.09.2019**
(21) Application number: 15460008.4
(22) Date of filing: 11.03.2015
(51) Int. Cl.: C02F 1/461, C25B 11/04, C02F 1/467, C02F 101/34

(54) **METHOD FOR THE PREPARATION OF ELECTRODES OF BORON-DOPED NANOCRYSTALLINE DIAMOND**
VERFAHREN ZUR HERSTELLUNG VON ELEKTRODEN AUS BORDOTIERTEM NANOKRISTALLINEM DIAMANT
PROCÉDÉ POUR LA PRÉPARATION D'ÉLECTRODES DE DIAMANT NANOCRISTALLIN DOPÉ AU BORE

(43) Date of publication of application: 14.09.2016
(73) Proprietor: Politechnika Gdanska, 80-233 Gdansk (PL)
(72) Inventor: Gnyba, Marcin, 80-180 Borkowo (PL); Bogdanowicz, Robert, 80-287 Gdansk (PL); Gardas, Mateusz, Slupsk (PL); Golunski, Lukasz, 81-047 Gdynia (PL); Sobaszek, Michal, 80-180 Gdansk (PL)
(74) Representative: Rzazewska, Dorota

(56) References cited:
- EP-A1- 1 748 958
- US-A1- 2006 175 953
- US-A1- 2008 070 049
- US-A1- 2008 268 150
- CHEN X ET AL: "COMPARISON OF TI/BDD AND TI/SNO2-SB2O5 ELECTRODES FOR POLLUTANT OXIDATION", JOURNAL OF APPLIED ELECTROCHEMISTRY, SPRINGER, DORDRECHT, NL, vol. 35, no. 2, 1 February 2005 (2005-02-01), pages 185-191, XP001229774, ISSN: 0021-891X, DOI: 10.1007/S10800-004-6068-0
- E. W. KUIPERS ET AL: "Deposition of nanocrystals on flat supports by spin-coating", CATALYSIS LETTERS, vol. 17, no. 1-2, 1 January 1993 (1993-01-01), pages 71-79, XP055206257, ISSN: 1011-372X, DOI: 10.1007/BF00763929
- M. Ficek ET AL: "Nanocrystalline CVD Diamond Coatings on Fused Silica Optical Fibres: Optical Properties Study", ACTA PHYSICA POLONICA A, 1 January 2015 (2015-01-01), pages 868-873, XP055206260, Retrieved from the Internet: URL:http://przyrbwn.icm.edu.pl/APP/PDF/127 /a127z3p39.pdf [retrieved on 2015-08-04]
- Comninellis, Christos, and Chen, Guohua: "Electrochemistry for the Environment", 2010, Springer, New York, NY, USA, XP002743049, * paragraph [03.2] *
- MICHAEL C. GRANGER ET AL: "Standard Electrochemical Behavior of High-Quality, Boron-Doped Polycrystalline Diamond Thin-Film Electrodes", ANALYTICAL CHEMISTRY, vol. 72, no. 16, 1 August 2000 (2000-08-01), pages 3793-3804, XP055206024, ISSN: 0003-2700, DOI: 10.1021/ac0000675

## Description

The invention relates to a method for the preparation of electrodes of boron-doped nanocrystalline diamond.

### Prior art

At present, on the market, there are several available technologies for the purification of water contaminated by hardly biodegradable compounds. These technologies can be divided into: biological purification, advanced oxidation processes (AOP), electrochemical oxidation with the use of electrodes other than those of diamond and combustion.

The most popular method is biological purification which is well researched and relatively cheap. Thus, e.g., US Patent 7520980 discloses a bioreactor system for microbiological treatment of aquatic waste comprising at least one highly elastic substrate providing an environment for biomass growth, wherein the substrate includes a large number of threads and synthetic fibres with appropriate parameters and appropriately arranged relative to each other. European Application EP 2641877 discloses a method for treating a fluid stream with waste liquid containing organic substances, including contacting this stream with biomass located in a bioreactor, and appropriate treatment of streams flowing from the bioreactor, taking into account, among others, a membrane filtration unit and an extraction step US Patent 7135115 discloses a method for treating waste liquid with the use of a membrane bioreactor which produces excessive biological sludge and processes water components. This is achieved by extraction of biological sludge and appropriate treatment of dehydrated effluent. US 8268169 describes a system and a method for water treatment, taking into account the use of a hydrodynamic separator for removing most of suspended solids.

The disadvantage of the biological treatment of water contaminated with hardly biodegradable compounds is the time required for the purification, as well as the inability to remove all the compounds contained in the water being purified. Furthermore, some substances can cause death of microorganisms, which results in additional costs and stops the whole process. For this reason, additional techniques for purification are required, which complicates and increases the cost of the whole process.

Another group of techniques is constituted by the so-called advanced oxidation processes (AOP). They are physicochemical methods using strong oxidising potential of radicals, and in particular of the hydroxyl radical. The most common techniques are various modifications of the Fenton process (EP 1473278 A1, CN 102503000 A, CN 102139938 B), photocatalytic oxidation on titanium oxide (IV) (CN 103523888 A, EP 1686095 A1) and the use of UV radiation in combination ozone or hydrogen peroxide (EP 2158164 B1, US 20100133202 A1). Although these techniques exhibit a high degree of purification, they are, on the other hand, very energy-intensive, require the addition of chemicals, and also require considerable financial outlays.

The most primitive technique (as described in Introduction to Hazardous Waste Incineration, 2nd Etition, J. J. Santoleri, J. Reynolds, L. Theodore, 2000) for disposing of difficult chemical wastes consists in concentrating, evaporating and finally combustion thereof. This technique allows for disposing of troublesome contaminants but it is very expensive and increasingly obsolete. Furthermore, this method does not lead to the complete mineralisation of waste, and secondary waste (e.g. phenols) is formed as a result of conducting it.

Another method of purifying water from hardly biodegradable compounds includes electrochemical techniques. These methods use electrodes of lead, iridium and rutile oxides, which may contaminate the environment with these metals in the process of electrolysis. They are consumable electrodes, and the process using the electrodes known from the prior art is very energy-intensive, which greatly limits their applications. Therefore, development of new electrodes is essential to solve the problems associated with the use of known electrodes.

In the prior art, methods for purifying waste water with the use of diamond electrodes are known. Document CN 101671085 discloses the use of a membrane electrode of boron-doped diamond in electrochemical purification of waste water contaminated with organic compounds. The electrode operates in the environment of microwaves which, among others, activate the electrode of boron-doped diamond. The process uses microwaves which heat the waste water, which further increases the power consumption and generates unpleasant odours through the evaporation of contaminants. This further complicates the device structure, and thus increases the cost of its purchase and operation.

CN 102765783 discloses a method for purifying waste water with the use of electrode coated with boron-doped diamond and microwaves which increase the efficiency of the reaction mineralising the organic compounds which constitute water contamination. This process also uses microwaves which heat the waste water, which further increases power consumption and generates unpleasant odours through the evaporation of contaminants. This further complicates the device structure, and thus increases the cost of its purchase and operation.

Methods for the preparation of diamond electrodes used in waste water purification methods are known in the art. Specifically, US Application 20090169815 discloses a method for manufacturing a diamond electrode including roughening the surface of the electrode shaft with sand blowing, etching the roughened surface and applying a diamond layer on the electrode shaft, wherein etching, which is not an oxidative process, is conducted so that more than 5 µm of material of the electrode shaft is removed. The process requires the use of harmful, concentrated acids, e.g. HF. Sandblasting of the diamond electrode introduces defects in the form of graphite inclusions, thus deteriorating the activity of the electrode and the disposal efficiency.

US Patent 5961719 discloses a method and a device for applying diamond coatings on a non-diamond substrate, such as e.g. a silicone plate. The method is limited to silicon substrates which are not suitable for scalable process of disposal, and the electrode made by this method is characterised by a low mechanical resistance. In the method according to US Patent 5961719, a high voltage applied to Mo electrode is used to nucleate the diamond, which will cause Mo sputtering, (Mo) metallic inclusions in the diamond material.

The method described in CN 1341774 relates to the manufacture of electrodes coated with a conductive boron-doped diamond coating. The method is limited to silicon substrates which are not suitable for scalable process of disposal, and are characterised by a low mechanical resistance. The method according to the invention does not allow for the manufacture of electrodes with a large surface or on metallic substrates, moreover, extremely expensive trimethylborane is used as a dopant - 3-4 more expensive than diborane.

EP Application 2077344 discloses a method for applying a diamond layer on a graphite substrate using the CVD (Chemical Vapor Deposition) process, in which a step of pre-treating the graphite substrate takes place before the CVD process. The method according to EP 2077344 includes: cleaning the surface under reduced pressure, at a temperature above 500°C, in the environment of an etching gas, mechanical removal of loose particles, nucleation of very small diamond particles on the substrate surface, and degasification under reduced pressure for the removal of adsorbed hydrocarbons and air, at a temperature above 500°C. The process is carried out on graphite substrates which are not as mechanically and chemically stable as metallic or glass substrates. The layers synthesised by this method will have graphite inclusions deteriorating electrochemical parameters of the electrode, which makes the electrode less stable.

Document DE 12009048108, in turn, discloses a method for applying a diamond layer with crystals having a particle size of the order of micrometres, characterised in that the surface of the crystals is eroded by electro-etching so that the effective surface of the diamond coating is increased at least 1.5 times. The large grain size of the diamond electrode introduces graphite inclusions between edges, thus deteriorating its activity and disposal efficiency. The etching process requires the use of harmful, concentrated acids and forms intergranular defects, which increases the disposal efficiency but shortens the electrode life.

Document EP1748958 discloses diamond coated electrode having a multi-layer diamond coating manufactured by HFCVD (Hot Filament Chemical Vapor Deposition) method. In the HFCVD method, the high-temperature filament is used for making atomic hydrogen efficient in the diamond layers deposition, also as the boron source the expensive trimethylborane is used as a dopant - 3-4 more expensive than diborane. The manufacturing method is energy and time consuming, the deposition process taking around 40 hours. US 2006/175953 A1 discloses a process for the production of a multi-layer microcrystalline electrically conductive diamond electrode by using diborane as dopant in CVD process with hydrogen rich microwave plasma.

Disadvantages of the prior art methods for the preparation of electrodes are: intergranular defects, metallic inclusions, limited amount of substrate types, contaminations with oxygen and hydrogen, low adhesion on water-repellent substrates.

The aim of the invention is to provide a new method for the preparation of electrodes of boron-doped nanocrystalline diamond (B-NCD), which leads to electrodes of high electrochemical activity, extended life in reactive environments, higher adsorption of organic matter, and lower power consumption as compared to electrodes known in the prior art.

Another aim of the invention is to improve the disposal efficiency for toxic substances or hardly biodegradable chemical substances through the use of the electrode manufactured by the method according to the invention.

Unexpectedly, it turned out that the selection of parameters for the process for the manufacture of electrodes of boron-doped nanocrystalline diamond (B-NCD) allows for obtaining electrodes with desired properties and solves the problems associated with obtaining the electrodes.

The object of the invention is a method for the preparation of electrodes of boron-doped nanocrystalline diamond B-NCD with multi-layer diamond coating, characterised in that it consist of the following steps:
a) Preparation of a substrate by subjecting a titanium plate in an ultrasonic bath lasting 5 minutes in acetone, followed by washing in isopropanol and drying under a nitrogen stream;
b) Application of a first diamond layer of a thickness of the order of 5-20 nm, containing crystals of the nanodiamond obtained by detonation with a size of 2-15 nm, in the form of nanodiamond nuclei by spin-coating or dip-coating, wherein the density of nanodiamond nuclei is not lower than 10¹⁰/cm² with the use of a solution containing: 0,25% of nanodiamond with average grain size 10 nm, 0,5% of polyvinyl alcohol and dimethyl sulfoxide as a solvent;
c) Application of an adhesive diamond layer in the CVD (Chemical Vapor Deposition) process, wherein the nucleated electrode substrate from step b) is heated up to 500 °C under conditions that a hydrogen rich microwave plasma contains 4% by volume of methane and 5000 ppm by volume of boron supplied by as diborane precursor (B₂H₆), wherein the pressure of 6,7 kPa (50 torr) and the constant flow of hydrogen of 3,34 x 10⁻⁶ m³/s (200 sccm) are maintained and the process is carried out for 30-60 minutes with the use of microwaves at a frequency of 2,45 GHz and with a power of 1300 W;
   a) Application of a working electrode layer in the CVD (Chemical Vapor Deposition) process, wherein the electrode substrate from step c) is heated up to 700°C under conditions that the hydrogen rich microwave plasma contains 1% by volume of methane and 5000 ppm by volume of boron supplied as diborane precursor (B₂H₆), wherein the pressure of 6,7 kPa (50 torr) and the constant flow of gas of 5,1 x 10⁻⁶ m³/s (300 sccm) are maintained and the process is carried out for 6 hours with the use of microwaves at a frequency of 2,45 GHZ and with the power of 1300 W;
   b) Hydrogenation of the working layer by heating the electrode obtained from step d) to 700 °C with the presence of a hydrogen rich microwave plasma, the pressure is 5,3 kPa (40 torr) and the constant flow of hydrogen is 5,1 x 10⁻⁶ m³/s (300 sccm), wherein the process is carried out for 10 minutes with the use of microwaves at a frequency of 2,45 GHz and with the power of 1300 W.

Preferably, in the method according to the invention, for flat substrates with a size of 5-50 mm the step b) is carried out through nucleation by spin-coating.

Preferably, in the method according to the invention, for substrates of different shapes, with a size above 50 mm the step b) is carried out through nucleation by dip-coating. In particular, with the method according to the invention, electrodes in the form of long and thin cylinders can be prepared.

The method according to the invention differs from the prior art methods for the preparation of electrodes of boron-doped nanocrystalline diamond in that the steps of the method according to the invention are selected so as to form a multi-layer composite coating comprising nanodiamonds, wherein parameters of the CVD process, especially partial pressure of working gases, working pressure (of the process), substrate/process temperature and microwave power in a particular way affect characteristics of the electrode obtained by the process according to the invention. Pressure affects the purity and the size of crystals, temperature has an influence on the content of sp³ and the size of crystals, and microwave power affects the content of sp³ and the growth kinetics.

In the method, according to the invention the step c), during application of an adhesive diamond layer in the CVD process the hydrogen rich microwave plasma is used.

Therefore, in the method according to the invention, a layer containing nanodiamonds is obtained with a much smaller crystal size than in electrodes manufactured by the methods known in the prior art. Nanodiamonds known from the prior art have a size of above 1µm, and the electrodes according to the invention below 300 nm. As a result, the potential electrochemical activity of the electrode, and therefore its sensitivity in the process of detection of toxic substances and the efficiency in the processes of disposal of these substances were increased.

The electrode manufactured according to the invention with multi-layer diamond coating is doped with boron at the level of 10¹⁶-10²¹ /cm⁻³, it means that in one cubic centimetre of the electrode there are 10¹⁶-10²¹ of boron donors, wherein the content of sp³ phase is not lower than 70%.

Preferably, for the electrode manufactured according to the invention the resistance of the working layer is in the range of 2kOhm-30mOhm with a limit of detection at the level of 10⁻⁶ - 10⁻⁹M.

The electrodes prepared by the method according to the invention can be used to detect and dispose of toxic and hardly biodegradable chemical substances.

B-NCD is the most efficient semiconductor material to be used in the manufacture of electrochemical sensors and electrodes for the mineralisation of dangerous contaminations: pesticides, surfactants and antibiotics, as well as waste from animal husbandry. The B-NCD structure allows for effectively carrying out the oxidation reaction, which leads to the mineralisation of hardly biodegradable contaminations. This is possible because of a wide electrochemical window and a high chemical resistance. A great advantage of B-NCD electrodes is their ability to generate high concentrations of hydroxyl radicals.

Detection of toxic substances with the use of the electrode prepared by the method according the invention consists in recognising such a substance by a characteristic peak of oxidation at a given potential. It is also possible to modify the surface of the diamond electrode in order to obtain selectivity for a given group/chemical compound.

The solution according to the invention has advantages in the form of:

### TECHNOLOGICAL ADVANTAGES:

- The method allows for covering large surfaces of substrates, among others, selected from the group of: metals, silicon, glass, graphite, glassy carbon (up to 8 inches in diameter),
- The B-NCD electrodes prepared according to the method are biocompatible, so they can be used in medicine and bio applications, e.g. in DNA biosensors, toxin, heavy metal sensors,
- The B-NCD electrodes prepared according to the method can be easily recalibrated using potentials in the range of -2V- + 3V to working electrodes or to detectors and sensors,
- The B-NCD electrodes prepared according to the method are suitable for operation in extreme chemical conditions, exhibit a high durability in harsh environmental conditions, i.e. in both acidic and basic environments, can work effectively at temperatures up to 500°C.
- The B-NCD electrodes prepared according to the method are dedicated to hardly biodegradable substances (plant protection products, alkaloids, infectious materials and others, more specifically they allow for the disposal of, among others, phenol, polycyclic aromatic compounds, naphthalene, polychlorinated biphenyls (PBF), dyes, biphenyls, antibiotics, pesticides),
- The ability to generate high concentrations of active hydroxyl radicals, which results in that the process using the electrode prepared by the method according to the invention is ecological.

### ECONOMIC PROFIT OF USING THE ELECTRODE ACCORDING TO THE INVENTION:

- Power consumption 10x lower compared to conventional boron-doped diamond (BDD) electrodes (0.2 - 2 A cm⁻²), while maintaining the same efficiency,
- Chemical inertness, and thus long life (counted in years) of B-NCD electrode in contrast to conventional BDD electrodes which need to be replaced more frequently (days, months),
- Simultaneous disposal of chemical substances and elimination of microbes, which reduces the outlay (one set instead of two),
- During the process for the preparation of the electrode, hydrogen and light hydrocarbons are formed as a byproduct.

### ECONOMIC PROFIT OF THE METHOD ACCORDING TO THE INVENTION:

- The use of the CVD process in microwave plasma minimises the amount of metal contaminants in the process for the manufacture of the diamond electrode,
- The use of diborane (B₂H₆) allows for effective doping with boron without contamination derived from oxygen,
- The use of PVA-enriched nanodiamond suspension allows the nucleation of substrates with low wettability

### NON-ECONOMIC PROFIT:

- The material from which the B-NCD electrodes are made is inert for the environment in comparison with Ir₂O, PbO₂, SnO₂, IrO₂-Ta₂O₅, RuO₂-IrO₂ electrodes, known from the prior art, which cause the precipitation of these toxic metals to the environment, and is biocompatible.

The electrodes prepared by the method according to the invention, depending on their size, are characterised by a similar electrochemical activity, as shown in current-voltage curves.

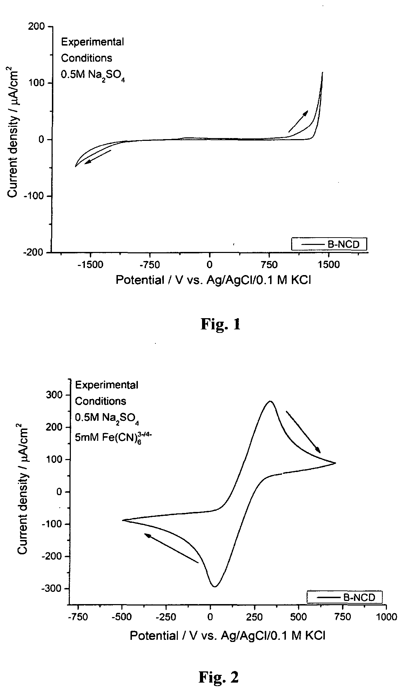

**Fig. 1** shows current-voltage curves of the background current of cyclic voltammetry - in 0.5 M Na₂SO₄ (electrochemical potential window) for boron-doped nanocrystalline diamond electrodes prepared by the method according to the invention of Examples 1 and 2. Scan rate = 100 mV/s.
**Fig. 2** shows current-voltage curves of cyclic voltammetry - for 5 mM Fe(CN)₆^{/3-/4} in 0.5 M Na₂SO₄ for boron-doped nanocrystalline diamond electrodes prepared by the method according to the invention of Examples 1 and 2. Scan rate = 100 mV/s.

The invention is explained in detail in the following examples.

### EXAMPLE 1

**The electrode was prepared according to the following procedure:**

### Preparation of a substrate:

The substrate of titanium plate (ASTM Grade 1,99.5%) is subjected to an ultrasonic bath lasting 5 min in acetone, followed by washing in isopropanol and drying under a nitrogen stream.

### Preparation of a first diamond layer - nanodiamond nuclei:

A nucleating layer of a thickness of the order of 5-20 nm, containing crystals of the nanodiamond obtained by detonation, with a size of 2-15 nm (average grain size 10 nm), is used. Density of nanodiamond nuclei is not lower than 10¹⁰/cm² in relation to the substrate surface.

The layer of nanodiamond nuclei is applied with the use of a solution containing:
nanodiamond 0.25%, average grain size 10 nm,
polyvinyl alcohol (PVA) 0.5%
solvent: dimethyl sulfoxide (DMSO).

### Nucleation by Spin Coating:

Nucleation by Spin Coating is used for flat surfaces with a size of 5- 50 mm. In this process, the entire surface of the substrate is covered with a solution prepared as described above. An excess of the solution is removed by spin coating for 60 s at a speed of 5000 rpm. Subsequently, the substrate is dried for 10 minutes in air at room temperature.

### Application of an adhesive diamond layer

This step of the method is carried out in a device for microwave plasma enhanced chemical vapor deposition (MW-PECVD).

The adhesive diamond layer is applied by subjecting a previously prepared substrate, with a layer of nanodiamond nuclei applied, to the activity of a hydrogen rich microwave plasma contains 4% by volume of methane and 5000 ppm by volume of boron supplied by diborane precursor. For this purpose, the nucleated electrode substrate is heated to 500°C and the pressure of 6,7 kPa (50 torr) and the constant flow of hydrogen of 3,34 x 10⁻⁶ m³/s (200 sccm) are maintained. The process is carried out for 30 minutes with the use of microwaves at a frequency of 2.45 GHz and with a power of 1300 W.

### Application of a B-NC working electrode layer:

This step of the method is performed with the use of the CVD process.

The working electrode layer is applied by subjecting a previously prepared substrate with an adhesive layer to the activity a hydrogen rich microwave plasma contains 1% by volume of methane and 5000 ppm by volume of boron supplied by diborane precursor. For this purpose, the substrate with an adhesive layer is heated to 700°C and the pressure of 6,7 kPa (50 torr) and the constant flow of gas of 5,1 x 10⁻⁶ m³/s (300 sccm) are maintained. The process is carried out for 6 h with the use of microwaves at a frequency of 2.45 GHz and with a power of 1300 W.

### Hydrogenation of the working layer:

Hydrogenation of the working layer of the B-NCD electrode is carried out by subjecting a previously prepared electrode to the activity of a hydrogen rich microwave plasma. For this purpose, the electrode is heated to 700°C and the pressure of 5,3 kPa (40 torr) and the constant flow of hydrogen of 5,1 x 10⁻⁶ m³/s (300 sccm) are maintained.

The process is carried out for 10 min with the use of microwaves at a frequency of 2.45 GHz and with a power of 1300 W.

### EXAMPLE 2

**The electrode was prepared according to the following procedure:**

### Preparation of a substrate:

The substrate of titanium (ASTM Grade 1, 99.5%) is subjected to an ultrasonic bath lasting 5 min in acetone, followed by washing in isopropanol and drying under a nitrogen stream.

### Preparation of a first diamond layer - nanodiamond nuclei:

A nucleating layer of a thickness of the order of 5-20 nm, containing grains of the nanodiamond obtained by detonation, with a size of 2-15 nm (average grain size 10 nm), is used. Density of nanodiamond nuclei is not lower than 10¹⁰/cm² in relation to the substrate surface.

The layer of nanodiamond nuclei is applied with the use of a solution containing:
nanodiamond 0.25%, average grain size 10 nm,
polyvinyl alcohol (PVA) 0.5%
solvent: dimethyl sulfoxide (DMSO).

### Nucleation by dip coating:

For flat substrates above 50 mm and substrates of different shapes, including in particular long, thin rods and pipes with diameters up to 50 mm, nucleation by dip coating is used. The nucleated substrate is secured to a stepper motor and dipped in a solution prepared as described above at a speed of 10 cm/min, and after full dipping of the substrate, it is taken out at the same speed. The process is repeated three times. Subsequently, the substrate is dried for 10 minutes in air at room temperature.

### Application of an adhesive diamond layer

This step of the method is carried out in a device for microwave plasma enhanced chemical vapor deposition (MW-PECVD).

The adhesive diamond layer is applied by subjecting a previously prepared electrode, with a layer of nanodiamond nuclei applied, to the activity of a hydrogen rich microwave plasma contains 4% by volume of methane and 5000 ppm by volume of boron supplied by diborane. precursor For this purpose, the nucleated electrode substrate is heated to 500°C and the pressure of 50 torr and the constant flow of hydrogen of 200 sccm are maintained. The process is carried out for 30 min with the use of microwaves at a frequency of 2.45 GHz and with a power of 1300 W.

### Application of a B-NC working electrode layer:

This step of the method is performed with the use of the CVD process.

The working electrode layer is applied by subjecting a previously prepared substrate with an adhesive layer to the activity of hydrogen rich microwave plasma contains 1% by volume of methane and 5000 ppm by volume of boron supplied by diborane precursor. For this purpose, the substrate with an adhesive layer is heated to 700°C and the pressure of 50 torr and the constant flow of gas of 300 sccm are maintained. The process is carried out for 6 h with the use of microwaves at a frequency of 2.45 GHz and with a power of 1300 W.

### Hydrogenation of the working layer:

Hydrogenation of the working layer of the B-NCD electrode is carried out by subjecting a previously prepared electrode to the activity of microwave hydrogen plasma. For this purpose, the electrode is heated to 500°C and the pressure of 40 torr and the constant flow of hydrogen of 300 sccm are maintained. The process is carried out for 10 min with the use of microwaves at a frequency of 2.45 GHz and with a power of 1300 W.

### EXAMPLE 3

The use of the electrode of boron-doped nanocrystalline diamond B-NCD, prepared according to Example 1, for the removal of phenol.

### - electrode of Example 1

In the electrolyser cell, a diamond electrode in the form of a plate on a titanium substrate with a size of 4 cm² was placed, then the tank was fed with 200 ml of an aqueous solution with a content of 1000 mg/l of phenol in 0.5 M Na₂SO₄, after which an electrolysis at a current density of 100 mA / cm² was carried out for 30 minutes.

Quantitative analysis of the final concentration of phenol, after the electrolysis, revealed the presence of phenol at the level of 2%. Power consumption was 4.5 kW/h/m^{3.}

### - commercial electrode

In an electrolyser cell, a commercially available microcrystalline diamond electrode with an average particle size of 1 micrometer in the form of a monocrystalline silicon plate with a size of 4 cm² was placed, then the tank was fed with 200 ml of an aqueous solution with a content of 1000 mg/l of phenol in 0.5 M Na₂SO₄, after which an electrolysis at a current density of 100 mA / cm² was carried out for 90 minutes.

Quantitative analysis of the final concentration of phenol, after the electrolysis, revealed the presence of phenol at the level of 8% of phenol. Power consumption was 16.5 kW/h/m^{3.}

Conclusions: the electrode obtained by the method according to the invention exhibits:
- Improvement of the disposal efficiency by 6%
- Shortening of the reaction time by 60 minutes (by 2/3)
- Reduction in power consumption by 2/3

### EXAMPLE 4

The use of the electrode of boron-doped nanocrystalline diamond B-NCD, prepared according to Example 2, for the removal of phenol.

### - electrode of Example 2

In an electrolyser cell, a diamond electrode in the form of a titanium rod having a diameter of 1 cm and a length of 5 cm was placed, then the tank was fed with 1500 ml of an aqueous solution with a content of 1000 mg/l of phenol in 0.5 M Na₂SO₄, after which an electrolysis at a current density of 100 mA/cm² was carried out for 60 minutes.

Quantitative analysis of the final concentration of phenol, after the electrolysis, revealed the presence of phenol at the level of 5% of phenol. Power consumption was 9 kW/h/m^{3.}

### - commercial electrode

In an electrolyser cell, a commercially available microcrystalline diamond electrode with an average particle size of 1 micrometer in the form of a monocrystalline silicon plate with a size of 4 cm² was placed, then the tank was fed with 200 ml of an aqueous solution with a content of 1000 mg/l of phenol in 0.5 M Na₂SO₄, after which an electrolysis at a constant current and at a current density of 100 mA / cm² was carried out for 90 minutes.

Quantitative analysis of the final concentration of phenol, after the electrolysis, revealed the presence of phenol at the level of 8% of phenol. Power consumption was 16.5 kW/h/m^{3.}

Conclusions: the electrode obtained by the method according to the invention exhibits:
- It allows for the reduction of the electrolyser cell by using electrodes with shapes other than planar.
- Improvement of the disposal efficiency by 3%
- Shortening of the reaction time by 30 minutes (by 1/3)
- Reduction in power consumption by 1/3

## Claims

1. A method for the preparation of electrodes of boron-doped nanocrystalline diamond B-NCD with multi-layer diamond coating, **characterised in that** it consists of the following steps:
a) Preparation of a substrate by subjecting a titanium plate in an ultrasonic bath lasting 5 minutes in acetone, followed by washing in isopropanol and drying under a nitrogen stream;
b) Application of a first diamond layer of a thickness of the order of 5-20 nm, containing crystals of the nanodiamond obtained by detonation with a size of 2-15 nm, in the form of a nanodiamond nuclei with density of the nanodiamond nuclei in relation to the substrate surface not lower than 10¹⁰/cm², with the use of a solution containing: 0,25% of nanodiamond with average grain size 10 nm, 0,5% of polyvinyl alcohol and dimethyl sulfoxide as a solvent;
c) Application of an adhesive diamond layer in the CVD (Chemical Vapor Deposition) process, wherein the nucleated electrode substrate from step b) is heated up to 500 °C under conditions that a hydrogen rich microwave plasma contains 4% by volume of methane and 5000 ppm by volume of boron supplied as diborane precursor (B₂H₆), wherein the pressure of 6,7 kPa (50 torr) and the constant flow of hydrogen of 3,34 x 10⁻⁶m³/s (200 sccm) are maintained and the process is carried out for 30 minutes with the use of microwaves at a frequency of 2,45 GHz and with a power of 1300 W;
d) Application of a working electrode layer in the CVD (Chemical Vapor Deposition) process, wherein the electrode substrate from step c) is heated up to 700°C under conditions that the hydrogen rich microwave plasma contains 1% by volume of methane and 5000 ppm by volume of boron supplied as diborane precursor (B₂H₆), wherein the pressure of 6,7 kPa (50 torr) and the constant flow of gas of 5,1 x 10⁻⁶ m³/s (300 sccm) are maintained and the process is carried out for 6 hours with the use of microwaves at a frequency of 2,45 GHZ and with the power of 1300 W;
e) Hydrogenation of the working layer by heating the electrode obtained from step d) to 700 °C with the presence of a hydrogen rich microwave plasma, the pressure is 5,3 kPa (40 torr) and the constant flow of hydrogen is 5,1 x 10⁻⁶ m³/s (300 sccm), wherein the process is carried out for 10 minutes with the use of microwaves at a frequency of 2,45 GHz and with the power of 1300 W.

2. The method according to claim 1, **characterised in that** for flat substrates with a size of 5-50 mm the step b) is carried out through nucleation by spin-coating.

3. The method according to claim 1, **characterised in that** for substrates of different shapes, with a size above 50 mm the step b) is carried out through nucleation by dip-coating.

## Patentansprüche

1. Verfahren zur Herstellung von Elektroden aus bordotiertem nanokristallinem Diamant B-NCD mit mehrschichtiger Diamantbeschichtung, **dadurch gekennzeichnet, dass** es die folgenden Schritte umfasst:
a) Herstellung eines Substrats durch Unterwerfen einer Titanplatte in einem 5-minütigen Ultraschallbad in Aceton, gefolgt von Waschen in Isopropanol und Trocknen unter einem Stickstoffstrom;
b) Auftragen einer ersten Diamantschicht mit einer Dicke in der Größenordnung von 5-20 nm, die durch Detonation erhaltenen Nanodiamantkristalle mit einer Größe von 2-15 nm enthält, in Form Nanodiamantkeime mit einer Dichte der Nanodiamantkeime in Bezug auf die Substratoberfläche von nicht weniger als 10¹⁰/cm², unter Verwendung einer Lösung, die enthält: 0,25% Nanodiamant mit durchschnittlicher Korngröße 10 nm, 0,5% Polyvinylalkohol und Dimethylsulfoxid als Lösungsmittel;
c) Auftragen einer adhäsiven Diamantschicht im CVD-Verfahren (Chemical Vapor Deposition), wobei das keimhaltige Elektrodensubstrat aus Schritt b) auf 500°C erwärmt wird unter Bedingungen, dass ein wasserstoffreiches Mikrowellenplasma 4 Vol.-% Methan und 5000 Vol.-ppm Bor enthält, das als Diboranvorstufe (B₂H₆) zugeführt wird, wobei der Druck von 6,7 kPa (50 Torr) und der konstante Wasserstoffstrom von 3,34 x 10⁻⁶m³/s (200 sccm) beibehalten werden und das Verfahren für 30 Minuten unter Verwendung von Mikrowellen mit einer Frequenz von 2,45 GHz und mit einer Leistung von 1300 W durchgeführt wird;
d) Auftragen einer Arbeitselektrodenschicht im CVD-Verfahren (Chemical Vapor Deposition), wobei das Elektrodensubstrat aus Schritt c) auf 700°C erwärmt wird unter Bedingungen, dass das wasserstoffreiches Mikrowellenplasma 1 Vol.-% Methan und 5000 Vol.-ppm Bor enthält, das als Diboranvorstufe (B₂H₆) zugeführt wird, wobei der Druck von 6,7 kPa (50 Torr) und der konstante Gasstrom von 5,1 x 10⁻⁶m³/s (300 sccm) beibehalten werden und das Verfahren für 6 Stunden unter Verwendung von Mikrowellen mit einer Frequenz von 2,45 GHz und mit der Leistung von 1300 W durchgeführt wird;
e) Hydrierung der Arbeitsschicht durch Erwärmen der aus Schritt d) erhaltenen Elektrode auf 700°C in Gegenwart eines wasserstoffreichen Mikrowellenplasmas, der Druck ist 5,3 kPa (40 Torr) und der konstante Wasserstoffstrom ist 5,1 x 10⁻⁶ m³/s (300 sccm), wobei das Verfahren für 10 Minuten unter Verwendung von Mikrowellen mit einer Frequenz von 2,45 GHz und mit einer Leistung von 1300 W durchgeführt wird.

2. Verfahren nach Anspruch 1, **dadurch gekennzeichnet, dass** für flache Substrate mit einer Größe von 5-50 mm der Schritt b) mittels Keimbildung durch Rotationsbeschichtung durchgeführt wird.

3. Verfahren nach Anspruch 1, **dadurch gekennzeichnet, dass** für Substrate verschiedener Formen, mit einer Größe über 50 mm, der Schritt b) mittels Keimbildung durch Tauchbeschichtung durchgeführt wird.

## Revendications

1. Procédé pour le préparation de électrodes de diamant nanocrystallin dopé au bore B-NCD avec un revêtement de diamant multi-couche, **caractérisé en ce qu'**il comporte les étapes suivantes :
a) Préparation d'un substrat en soumettant une plaque de titane dans un bain à ultrasons d'une durée de 5 minutes dans de l'acétone, suivie d'un lavage à l'isopropanol et d'un séchage sous un flux d'azote ;
b) Application d'une première couche de diamant d'une épaisseur de l'ordre de 5-20 nm, contenant des cristaux du nanodiamant obtenus par détonation d'une taille de 2-15 nm, sous la forme d'un noyau de nanodiamant à une densité des noyaux de nanodiamant en relation à la surface du substrat au moins égale à 10¹⁰/cm², avec l'utilisation d'une solution contenant: 0,25% de nanodiamant d'une taille moyenne de grain de 10 nm, 0,5% d'alcool polyvinylique et de diméthylsulfoxyde en tant que solvant ;
c) Application d'une couche adhésive de diamant dans le procédé de dépôt chimique en phase vapeur (CVD) dans lequel le substrat d'électrode nucléé de l'étape b) est chauffé jusqu'à 500°C dans des conditions telles qu'un plasma à micro-ondes riche en hydrogène contient 4 % en volume de méthane et 5000 ppm en volume de bore fourni en tant que précurseur diborane (B₂H₆), où la pression de 6,7 kPa (50 torr) et le débit constant d'hydrogène de 3,34 x 10⁻⁶ m³/s (200 sccm) sont maintenus et le processus est mis en oeuvre pendant 30 minutes avec l'utilisation de micro-ondes à une fréquence de 2,45 GHz et à une puissance de 1300 W ;
d) Application d'une couche de travail d'électrode dans le procédé de dépôt chimique en phase vapeur (CVD) dans lequel le substrat d'électrode de l'étape c) est chauffé jusqu'à 700°C dans des conditions telles qu'un plasma à micro-ondes riche en hydrogène contient 1 % en volume de méthane et 5000 ppm en volume de bore fourni en tant que précurseur diborane (B₂H₆), où la pression de 6,7 kPa (50 torr) et le débit constant de gaz de 5,1 x 10⁻⁶m³/s (300 sccm) sont maintenus et le processus est mis en oeuvre pendant 6 heures avec l'utilisation de micro-ondes à une fréquence de 2,45 GHz et à une puissance de 1300 W ;
e) Hydrogénation de la couche de travail en chauffant à 700°C l'électrode obtenue à l'étape d) en présence d'un plasma à micro-ondes riche en hydrogène, la pression est de 5,3 kPa (40 torr) et le débit constant d'hydrogène est de 5,1 x 10^{- 6} m³/s (300 sccm), où le processus est effectué pendant 10 minutes avec l'utilisation de micro-ondes à une fréquence de 2,45 GHz et à une puissance de 1300 W.

2. Procédé selon la revendication 1, **caractérisé en ce que** pour les substrats plats d'une taille de 5 à 50 mm, l'étape b) est réalisée par nucléation par centrifugation.

3. Procédé selon la revendication 1, **caractérisé en ce que** pour des substrats de formes différentes, d'une taille supérieure à 50 mm, l'étape b) est réalisée par nucléation par enduction par immersion.
